# EUROPÄISCHE PATENTSCHRIFT

(11) **EP 1 270 303 B1**
(45) Veröffentlichungstag und Bekanntmachung des Hinweises auf die Patenterteilung: **11.07.2007**
(21) Anmeldenummer: 02100523.6
(22) Anmeldetag: 21.05.2002
(51) Int. Cl.: B60K 6/04

(54) **Verfahren zum Steuern eines Antriebsstrangs eines Hybridfahrzeugs**
Method for controlling the power train of a hybrid vehicle
Méthode pour commander le groupe motopropulseur d'un véhicule hybride

(30) Priorität: 11.06.2001 DE 10128260
(43) Veröffentlichungstag der Anmeldung: 02.01.2003
(73) Patentinhaber: SIEMENS AKTIENGESELLSCHAFT, 80333 München (DE)
(72) Erfinder: Graf, Hans-Michael, Dr., 93077 Bad Abbach (DE); Knorr, Rainer, 93055 Regensburg (DE); Probst, Gregor, 84028 Landshut (DE)

(56) Entgegenhaltungen:
- EP-A- 0 800 951
- EP-A- 0 829 389
- WO-A-02/26520
- DE-A1- 10 005 581
- DE-A1- 19 747 265
- DE-C1- 19 831 487
- FR-A- 2 793 930
- US-A- 5 487 002
- US-A- 5 815 824
- US-A- 5 832 396
- PATENT ABSTRACTS OF JAPAN Bd. 2000, Nr. 10, 17. November 2000 (2000-11-17) -& JP 2000 188802 A (TOYOTA MOTOR CORP), 4. Juli 2000 (2000-07-04)

## Beschreibung

Die Erfindung betrifft ein Verfahren zum Steuern des Antriebsstrangs eines Hybridfahrzeugs.

Zukünftige Fahrzeuggenerationen werden zunehmend mit Hybridantrieben ausgestattet sein. Hybridantriebe weisen neben dem herkömmlichen Verbrennungsmotor ein zusätzliches Antriebsaggregat auf. Dieses zusätzliche Antriebsaggregat ist häufig als Elektromotor ausgeführt, der über einen wieder aufladbaren Energiespeicher, zum Beispiel eine Batterie, mit Energie versorgt wird. Hybridantriebe weisen im Vergleich zu herkömmlichen Antrieben eine Vielzahl zusätzlicher Betriebszustände des Antriebsstrangs auf. Neben einem rein verbrennungsmotorischen Betrieb sind auch ein rein elektromotorischer Betrieb und ein kombinierter Betrieb möglich. Des Weiteren kann zwischen Betriebszuständen mit und ohne Ladung der Batterie unterschieden werden.

Um die in einem Hybridfahrzeug gespeicherte Energie - im flüssigen Kraftstoff und in dem Energiespeicher - möglichst effizient zu nutzen und somit eine Überdimensionierung einzelner Komponenten des Antriebsstrangs zu vermeiden, werden hohe Anforderungen an die Steuerung des Antriebsstrangs gestellt. Abhängig vom Betriebszustand des Antriebsstrangs werden dem Kraftstoff und dem Energiespeicher unterschiedliche Energiemengen entnommen oder unterschiedliche Energiemengen in den Energiespeicher eingespeist. Bei der Steuerung ist insbesondere zu berücksichtigen, dass der Streckenverlauf der zukünftig zu absolvierenden Fahrstrecke entscheidenden Einfluss auf die benötigte oder rückzugewinnende Energiemenge hat.

Zukünftige Fahrzeuggenerationen werden häufig mit einem Navigationssystem oder ähnlichen Komponenten ausgestattet sein, die eine Vorausschau auf den Streckenverlauf der zukünftig zu absolvierenden Fahrstrecke und somit eine Abschätzung des zu erwartenden Energiebedarfs ermöglichen.

Aus der DE 198 31 487 C1 ist ein Verfahren zum Betrieb eines eine Batterie aufweisenden Hybridantriebes eines Kraftfahrzeuges bekannt, bei dem Informationen bezüglich einer zu absolvierenden Fahrstrecke erfasst werden. Unter Berücksichtigung dieser Informationen werden dann zu erwartende Leistungsanforderungen an den Hybridantrieb über den Verlauf der Fahrstrecke berechnet und abhängig von den berechneten Leistungsanforderungen und unter Berücksichtigung der Wirkungsgrade der Antriebskomponenten oder Betriebsarten wird schließlich ein Zeitplan ermittelt, der die Steuerung der einzelnen Antriebskomponenten oder Betriebsarten steuert.

Bei der US 5, 815,824 wird auf Basis der Gesamtdistanz einer mittels eines Navigationssystems geplanten Route zwischen der aktuellen Position eines Hybridkraftfahrzeugs und einem Ziel sowie auf Basis der verbleibenden Speicherkapazität, die eine Batterie für den elektrischen Antriebsmotor des Hybridfahrzeugs bereitstellt, ermittelt, ob das Hybridfahrzeug das Ziel erreichen kann.

Aufgabe der Erfindung ist es daher, unter Berücksichtigung der Fahrsituation und der Fahrstrecke eine bezüglich des Energiebedarfs möglichst optimale Steuerung für den Antriebsstrang eines Hybridfahrzeugs zu schaffen.

Diese Aufgabe wird durch ein Verfahren mit den Merkmalen des Patentsanspruchs 1 gelöst. Vorteilhafte Weiterbildungen der Erfindung sind in den Unteransprüchen niedergelegt.

Erfindungsgemäß werden zunächst Daten, die zumindest einen Teilabschnitt der zukünftig zu absolvierenden Fahrstrecke charakterisieren, angefordert. Abhängig von diesen Daten wird eine Betriebsstrategie für die einzelnen Komponenten des Antriebsstrangs festgelegt. Abhängig von der Betriebsstrategie und von den Streckendaten wird ein zu erwartender Energieverbrauch berechnet. Anschließend wird eine Zeitspanne berechnet, für die die berechnete Energie zur Verfügung gestellt werden kann. Wird die berechnete Zeitspanne als ausreichend erkannt, so werden die einzelnen Komponenten des Antriebsstrangs gemäß der Betriebsstrategie gesteuert. Wird die berechnete Zeitspanne dagegen als nicht ausreichend erkannt,
so wird eine alternative Betriebsstrategie festgelegt und die sich daraus ergebenden Zeitspanne erneut geprüft.

Ein Ausführungsbeispiel der Erfindung wird im folgenden anhand der Figuren erläutert. Es zeigen:
- Figur 1: eine schematische Darstellung eines Antriebsstrangs eines Hybridfahrzeugs und
- Figur 2: ein Flussdiagramm eines erfindungsgemäßen Verfahrens zum Steuern eines Antriebsstrangs gemäß Figur 1.

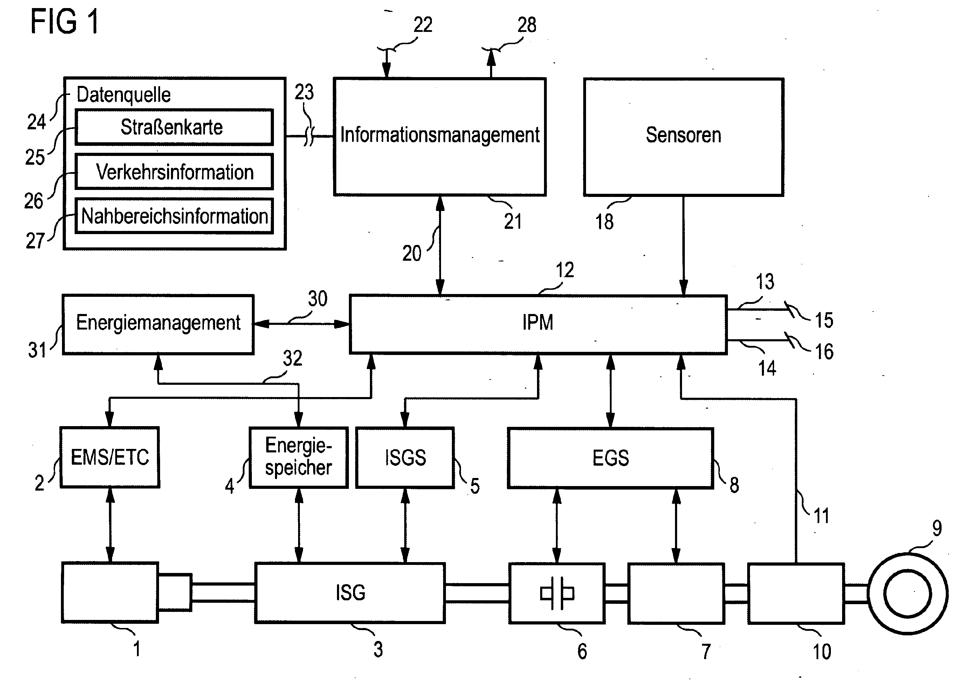

Die in Figur 1 dargestellte Anordnung zeigt den Antriebsstrang eines hybriden Kraftfahrzeuges, der von einem Verbrennungsmotor 1 angetrieben wird, wobei der Verbrennungsmotor 1 herkömmlich aufgebaut ist und deshalb nur schematisch dargestellt ist. Der Verbrennungsmotor 1 wird durch eine elektronische Motorsteuerung (EMS) 2 gesteuert, die auch die Funktion einer elektronischen Drosselklappenregelung (ETC) übernehmen kann. Ausgangsseitig ist der Verbrennungsmotor 1 über eine Welle mit einem Elektromotor in Form eines integrierten Startergenerators (ISG) 3 verbunden, durch den bei laufendem Verbrennungsmotor 1 ein Energiespeicher 4 geladen werden kann. Der Energiespeicher 4 ist dabei vorteilhaft als elektrochemische Batterie ausgebildet, kann aber ebenso als Brennstoffzelle, als Hochleistungs-Kondensator in Form von Ultra-Caps oder als Kombination aus verschiedenen dieser Speichertechnologien ausgebildet sein. Auch der Einsatz mehrerer Energiespeicher 4 ist denkbar. Bei stillstehendem Verbrennungsmotor 1 kann der integrierte Startergenerator 3 auch zum Anlassen des Verbrennungsmotors 1 verwendet werden. Der integrierte Startergenerator 3 ist dabei vorzugsweise als Asynchronmaschine ausgebildet, kann aber auch als Synchronmaschine oder Gleichstrommotor ausgebildet sein. Gesteuert wird der integrierte Startergenerator 3 durch eine ISG-Steuereinheit (ISGS) 5.

Vorteilhaft kann zwischen dem Verbrennungsmotor 1 und dem integrierten Startergenerator 3 eine nicht dargestellte Kupplung angeordnet sein, die es ermöglicht, den Verbrennungsmotor 1 von dem Antriebsstrang abzutrennen. Dies ermöglicht eine Entkopplung der Drehzahl des integrierten Startergenerators 3 von dem Verbrennungsmotor 1, wodurch die nur Verlustenergie erzeugende Bremswirkung des Verbrennungsmotor 1 ausgeschaltet wird und die elektrisch nutzbare Bremswirkung des Startergenerators 3 verbessert wird.

Weiterhin ist in dem Antriebsstrang eine Kupplung 6 angeordnet, durch die der Verbrennungsmotor 1 und der integrierte Startergenerator 3 mit einem Getriebe 7 verbunden oder von diesem getrennt werden kann. Die Kupplung 6 kann dabei, je nach Fahrzeugkonfiguration, beispielsweise als Trockenkupplung oder Wandlerüberbrückungskupplung ausgeführt sein. Die Kupplung 6 und das Getriebe 7 werden von einer elektronischen Getriebesteuerung (EGS) 8 angesteuert, wobei die elektronische Getriebesteuerung 8 verschiedene Übersetzungsverhältnisse des Getriebes 7 einstellen kann. Die Umschaltung zwischen den verschiedenen Übersetzungsverhältnissen erfolgt hierbei durch die elektronische Getriebesteuerung 8 automatisch durch eine entsprechende Regelung der Kupplung 6 und der Aktuatoren des Getriebes 7, z. B. für die Gassen- und Gangstellungen bei Ausführung des Getriebes 7 als automatisiertes Handschaltgetriebe. Alternativ zu einem Getriebe mit festen Gangstufen kann auch ein Getriebe mit kontinuierlich einstellbarem Übersetzungsverhältnis verwendet werden. Ebenso ist es unwesentlich, ob das Getriebe 7 als konventionelles Automatikgetriebe mit Planetenradsatz, als automatisiertes (automatisches) Handschaltgetriebe oder als Doppelkupplungsgetriebe ausgeführt ist.

Ferner ist der Antriebsstrang über ein nicht dargestelltes Differential mit den Rädern 9 des Kraftfahrzeugs verbunden. Aus Gründen der Übersichtlichkeit ist in der Figur beispielhaft nur ein Rad 9 dargestellt. Schließlich ist in dem Antriebsstrang ein Drehzahlsensor 10 angeordnet, der laufend die aktuelle Drehzahl N der Getriebeausgangswelle oder ein vergleichbares Signal, wie Raddrehzahl oder Fahrzeuggeschwindigkeit, misst und über eine Leitung 11 an ein systemübergreifendes Antriebsstrangmanagement (IPM) 12 übermittelt. Als weitere Eingangssignale erhält das Antriebsstrangmanagement 12 unter anderem über Leitungeh 13 und 14 Signale, die den Fahrerwunsch bezüglich eines Antriebsmoments bzw. eines Bremsmoments charakterisieren. Diese Signale können beispielsweise durch Auswertung der Stellungen des Fahrpedals 15 bzw. des Bremspedals 16 gewonnen werden. Des weiteren werden dem Antriebsstrangmanagement 12 weitere Signale von symbolisch zu einem Block zusammengefassten Sensoren 18 und eventuell auch Daten aus den dezentralen Steuereinrichtungen 2, 5 und 8 zugeführt.

Über eine Leitung 20 werden dem Antriebsstrangmanagement 12 auch Daten über die zukünftig zu absolvierende Fahrstrecke von einem Informationsmanagement 21 zur Verfügung gestellt. Hierzu weist das Informationsmanagement 21 eine Eingabeschnittstelle 22 zur Eingabe des Fahrziels oder der Zielposition des Kraftfahrzeugs durch den Fahrer auf. Das Informationsmanagement 21 ist über eine Datenschnittstelle 23 mit einer Datenquelle 24 verbunden. Die Datenquelle 24 weist eine digitalisierte Straßenkarte 25 auf. Der Begriff "Straßenkarte" soll dabei aber nicht einschränkend wirken. Neben Informationen über den bloßen Richtungsverlauf von Straßen kann die digitalisierte Straßenkarte beliebige Zusatzinformationen über die zu befahrenden Straßen oder Wege beinhalten. Die verfügbaren Streckeninformationen lassen sich dabei in drei Kategorien einteilen:
a) Informationen über das Streckenprofil Bezüglich des Streckenprofils ist sowohl der horizontale Verlauf (z.B. Kurven oder Abzweigungen) als auch der vertikale Verlauf (Steigungen oder Gefälle) von Bedeutung.
b) Informationen bezüglich der Verkehrsreglementierung Bezüglich Verkehrsreglementierung sind insbesondere Informationen von Bedeutung, die die Fahrgeschwindigkeit des Kraftfahrzeugs beeinflussen, zum Beispiel Geschwindigkeitsbegrenzungen, Stop-Schilder, Vorfahrtsregelungen oder Ortsschilder.
c) Informationen über die Art und die Beschaffenheit der Fahrstrecke Informationen über die Art der Fahrstrecke (Autobahn, Landstraße oder Ortsdurchfahrt) spielen bei der Steuerung des Antriebsstrangs eine entscheidende Rolle. Außerdem sind Informationen über die Beschaffenheit der Fahrstrecke (Asphalt, Schotter, schlechter Straßenzustand, Schlaglöcher) wünschenswert. Des Weiteren sind beispielsweise auch Informationen über Tunnelabschnitte von Interesse, da aufgrund der dann notwendigen Fahrzeugbeleuchtung ein erhöhter Energiebedarf in diesem Abschnitt der Fahrstrecke besteht.

Neben der Straßenkarte 25 weist die Datenquelle 24 vorteilhaft eine Verkehrinformationsquelle 26 auf, die die aktuellen Werte variabler Größen bezüglich der zu absolvierenden Fahrstrecke zur Verfügung stellt. Beispielhaft sind dabei folgende Informationen denkbar:
- Informationen über den Verkehrfluss (z.B. aktuelle Staumeldungen),
- Informationen über aktuell auftretende Änderungen der Straßenbeschaffenheit (z.B. Glatteis),
- Informationen über aktuelle oder zu erwartende, zum Beispiel die Sicht betreffende Witterungseinflüsse (Niederschläge, Nebel, Wettervorhersage),
- Informationen über den aktuellen Funktionszustand von Anlagen zur Verkehrsregelung (z.B. aktuelle Ampelphase),
- Informationen über außerordentliche Verkehrsreglementierungen (z.B. vorübergehend gesperrte Straßen oder umweltbedingte Vorschriften bezüglich eines emissionsarmen Betriebs).

Zudem kann die Datenquelle 24 eine Nähbereichs-Informationsquelle 27, z.B. in Form einer Kamera in Verbindung mit einem Bildverarbeitungssystem oder eines Radarsystems, die einfach oder mehrfach am Fahrzeug angebracht sind, aufweisen. Mit Hilfe einer derartigen Nahbereichs-Informationsquelle 26 ist es zum einen möglich, fahrzeugspezifische Informationen über die zu befahrende Fahrstrecke zu erlangen. Beispielsweise können Hindernisse auf der Fahrstrecke, im einfachsten Fall ein vorausfahrendes Fahrzeug, erkannt werden. Zum anderen können Informationen, die von den Datenquellen 24 und 25 nicht, unvollständig oder fehlerhaft zur Verfügung gestellt wurden, sinnvoll ergänzt, berichtigt oder ersetzt werden.

Die von den Datenquellen 25, 26 und 27 gelieferten Streckendaten werden vom Informationsmanagement 21 je nach Bedarf ausgewählt, kombiniert, klassifiziert und/oder komprimiert. Das Informationsmanagement 21 weist zusätzlich eine Ausgabeschnittstelle 28 auf, die es ermöglicht, optische oder akustische Signale an den Fahrer zu übermitteln.

Außerdem wird durch das Informationsmanagement 21 die aktuelle Fahrzeugposition bestimmt. Zur Ermittlung einer möglichst genauen Fahrzeugposition wird beispielsweise eines der folgenden Verfahren, auch in Kombination, angewendet:
- Positionsbestimmung über GPS (Global Positioning System, Satellitenortung),
- Koppelnavigation aus aktuellen Zustandsdaten des Fahrzeugs (Gierwinkel und Fahrzeuggeschwindigkeit),
- Differentielle Radsensordaten,
- Kompassdaten und/oder
- verschiedene Map-Matching Algorithmen.

Die Datenquelle 24 kann im Fahrzeug (on board) vorgesehen sein, kann aber auch ganz oder teilweise außerhalb des Kraftfahrzeugs (off board) angeordnet sein. Ist die Datenquelle 24 zumindest teilweise außerhalb des Kraftfahrzeugs angeordnet, werden die Daten drahtlos, zum Beispiel durch Funkübertragung mit Hilfe von GSM- oder UMTS-Signalen, an das Informationsmanagement 21 übertragen. Innerhalb des Kraftfahrzeugs können die Daten sowohl über Leitungen, zum Beispiel in Form eines Datenbus-Systems, als auch mittels drahtlosen Übertragungstechniken übertragen werden.

Das Antriebsstrangmanagement 12 legt abhängig von den zugeführten Signalen die Betriebsstrategie in Form von Sollzuständen des Antriebsstrangs fest. Mögliche Sollzustände, wie zum Beispiel "Segeln", "erweitertes Segeln", "rekuperatives Bremsen" oder "Boosten", sind beispielsweise aus der älteren Anmeldung WO 02/26520 A1 bekannt und daher an dieser Stelle nicht im Einzelnen beschrieben. Dabei werden durch das Antriebsstrangmanagement 12 auch die zentralen Betriebsparameter des Antriebsstrangs, wie zum Beispiel Getriebeübersetzungen und Soll-Drehmomente für die Antriebsaggregate, aber auch Antriebsart und Betriebspunkte festgelegt. Zur Umsetzung der festgelegten Betriebsstrategie werden diese Informationen den dezentralen Steuerungen oder Steuereinrichtungen 2, 5 und 8 in Form von Steuersignalen zugeführt.

Über eine bidirektionale Leitung 30 ist das Antriebsstrangmanagement 12 mit einem Energiemanagement 31 (EPM) - EPM steht dabei für Electrical Power Management - verbunden. Das Energiemanagement 31 ist seinerseits über eine Leitung 32 mit dem Energiespeicher 4 verbunden. Das Energiemanagement 12 sammelt alle Informationen über den aktuellen und zukünftigen elektrischen Energiebedarf sowie aktuelle und zukünftige Ladezustände des elektrischen Energiespeichers 4. Der Zustand des Energiespeichers wird dabei in einer Unterfunktion ermittelt, die häufig als Batterie-Monitoring bezeichnet wird. Diese Funktion beinhaltet die Übermittlung von Daten bezüglich optimaler und maximaler Leistungs- und Energieabgabe sowie optimaler und maximaler Leistungs- und Energieaufnahme. Zusätzlich steuert das Energiemanagement 31 das Zuschalten und Abschalten aller elektrischen Nebenverbraucher im Kraftfahrzeug, wie Scheibenheizung, Sitzheizung, Scheibenwischer, Beleuchtung, Klimaanlage und so weiter.

Die Steuerungen oder Steuereinrichtungen 2, 5 und 8 erzeugen abhängig von diesen Steuersignalen Stellsignale für die einzelnen Aggregate oder Komponenten des Antriebsstrangs. Das Antriebsstrangmanagement 12, das Informationsmanagement 21 und das Energiemanagement 31 sind in Figur 1 als eigenständige Steuereinheiten dargestellt, können aber ebenso ganz oder teilweise in einer gemeinsamen Steuereinheit untergebracht sein oder in eine oder mehrere der dezentralen Steuerungen oder Steuereinrichtungen 2, 5 oder 8 integriert sein. Ebenso sind auch die dezentralen Steuereinrichtungen 2, 5 und 8 als eigenständige Steuereinheiten dargestellt. Auch diese Einheiten können aber in beliebiger Art und Weise kombiniert in einem oder mehreren multifunktionalen Steuergeräten untergebracht werden.

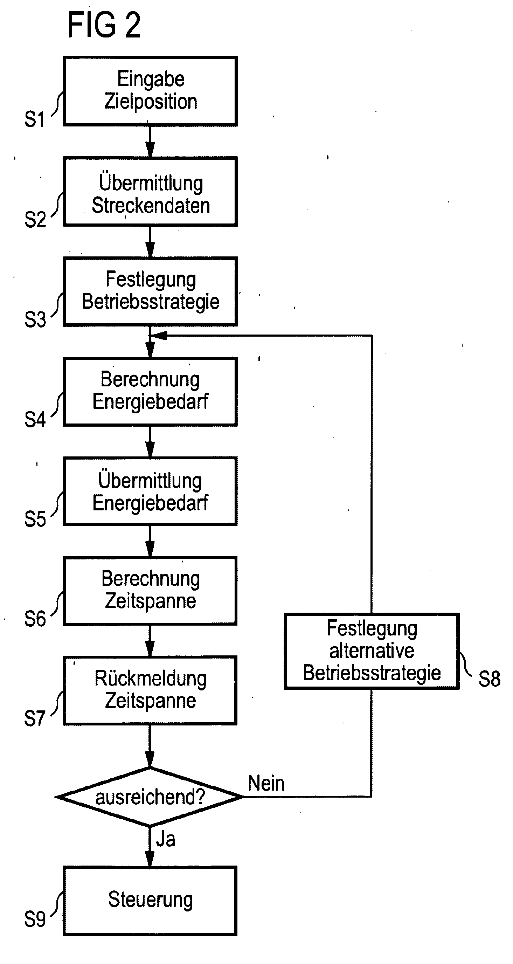

Im Folgenden wird anhand der Figur 2 das erfindungsgemäße Steuerverfahren für den Antriebsstrang eines Hybridfahrzeugs erläutert :

In einem Schritt S1 wird vom Fahrer das Fahrziel oder die Zielposition des Kraftfahrzeugs über die Eingabeschnittstelle 22 in das Informationsmanagement 21 eingegeben. Auf ein Anforderungssignal des Antriebsstrangmanagements 12 hin übermittelt das Informationsmanagement 21 in einem Schritt S2 Streckendaten über die zukünftig zu absolvierende Fahrstrecke an das Antriebsstrangmanagement 12. Dabei werden lediglich Daten bezüglich einer Teilstrecke der zu absolvierenden Fahrstrecke angefordert und übermittelt. Die Länge der Teilstrecke und somit die Datenmenge ist dabei abhängig vom aktuellen Ladezustand des Energiespeichers 4 und/oder von der Speicherkapazität des Energiespeichers 4. Am Ende oder kurz vor dem Ende der Teilstrecke werden dann vom Antriebsstrangmanagement 12 die Streckendaten für den nächsten Streckenabschnitt angefordert. Auch dabei ist die Länge der Teilstrecke und somit die Datenmenge wieder abhängig vom Ladezustand des Energiespeichers 4 zum Zeitpunkt der Datenanforderung.

Abhängig von den übermittelten Streckendaten für den angeforderten Streckenabschnitt und von den übrigen Eingangssignalen, die die aktuelle Fahrsituation charakterisieren, legt das Antriebsstrangmanagement 12 in einem Schritt S3 eine bezüglich eines Gütefunktionals aus Gesamtwirkungsgrad, Gesamtenergieverbrauch und Gesamtemission optimale Betriebsstrategie für diesen Streckenabschnitt fest. Dabei werden im wesentlichen folgende Betriebsparameter und Systemgrößen bestimmt:
- Sollzustände des Antriebsstrangs - inklusive der notwendigen Ein- und Ausschaltzeitpunkte für den Verbrennungsmotor und der Leistungsaufteilung zwischen Verbrennungsmotor, E-lektromötor und Energiespeicher
- Getriebeübersetzung - hat Auswirkungen auf die Wirkungsgrade von Verbrennungsmotor und Elektromotor
- Sollgeschwindigkeitsprofil - dabei werden alle Streckendaten berücksichtigt, die die voraussichtliche Fahrgeschwindigkeit beeinflussen, zum Beispiel Geschwindigkeitsbeschränkungen, Stop-Schilder, Ortsdurchfahrten, Staumeldungen, Kurven, nasse Fahrbahn oder Glatteis

In einem Schritt S4 ermittelt das Antriebsstrangmanagement 12 abhängig von den Streckendaten und der festgelegten Betriebsstrategie den resultierenden Energiebedarf. Je nach Streckentopologie und voraussichtlicher Fahrgeschwindigkeit kann der berechnete Energiebedarf sowohl positive Werte - Energie wird verbraucht - als auch negative Werte - Energie wird erzeugt - annehmen. Für die Berechnung des Energiebedarfs werden im einzelnen berücksichtigt:
- Leistung zur Überwindung des Luftwiderstands des Kraftfahrzeugs,
- Leistung zur Überwindung des Rollwiderstands des Kraftfahrzeugs (Reibleistung),
- Leistung zu Überwindung des Steigungswiderstands,
- Leistung für die positive oder negative Fahrzeugbeschleunigung

Der berechnete Energiebedarfswert wird dann in einem Schritt S5 von dem Antriebsstrangmanagement 12 über die Leitung 30 an das Energiemanagement 31 übermittelt. Vom Energiemanagement 31 wird daraufhin in einem Schritt S6 eine Zeitspanne berechnet, für die der geforderte Energiebedarf zur Verfügung gestellt werden kann. Dabei wird auch der voraussichtliche Energiebedarf für elektrische Nebenverbraucher berücksichtigt. So wird beispielsweise der Energieverbrauch folgender Komponenten berücksichtigt:
- Fahrzeugbeleuchtung bei Dunkelheit, Nebel oder in einem Tunnel
- Klimaanlage bei starker Sonneneinstrahlung
- Heizung bei niedriger Außentemperatur
- elektrische Lenkung oder elektrische Bremse bei Kurven
- aktive Dämpfung bei schlechtem Straßenzustand

In einer bevorzugten Ausführungsform wird vom Energiemanagement 31 abhängig vom übermittelten Energiebedarfswert eine Art Steuerungsplan für die elektrischen Nebenverbraucher festgelegt. Dabei wird insbesondere berücksichtigt, dass einige Nebenverbraucher, wie beispielsweise Fahrzeugbeleuchtung oder Scheibenwischer vom System nicht selbständig abgeschaltet werden dürfen, wohingegen andere Nebenverbraucher, wie zum Beispiel die Sitzheizung, zur kurzfristigen Energieeinsparung durchaus kurzzeitig außer Betrieb gesetzt werden können. Auf diese Weise kann der Energieverbrauch der elektrischen Nebenverbraucher an den aktuell angeforderten Energiebedarf angepasst werden und somit der geforderte Energiebedarf für eine möglichst lange Zeitspanne zur Verfügung gestellt werden.

In einem Schritt S7 wird die berechnete Zeitspanne an das Energiemanagement 31 zurückgemeldet. Wird die zurückgemeldete Zeitspanne vom Antriebsstrangmanagement 12 zur Umsetzung der optimalen Betriebsstrategie für den vorgegebenen Streckenabschnitt als nicht ausreichend erkannt, so wird vom Antriebsstrangmanagement 12 in einem Schritt S8 eine alternative Betriebsstrategie festgelegt, die zu einem geringeren Energiebedarf führt. Der darauf hin neu berechnete Energiebedarf (Schritt S4) wird dann erneut an das Energiemanagement 31 übertragen (Schritt S5) und von dort wird eine entsprechende neuberechnete Zeitspanne zurückgemeldet (Schritte S6 und S7). Dieser Vorgang wird solange wiederholt, bis die zurückgemeldete Zeitspanne vom Antriebsstrangmanagement 12 als ausreichend erkannt wird.

Ist auf diese Weise eine realisierbare Betriebsstrategie gefunden, wird diese in einem Schritt S9 derart umgesetzt, dass das Antriebsstrangmanagement 12 eine koordinierte Berechnung der zentralen Betriebsparameter des Antriebsstrangs durchführt und dabei Getriebeübersetzungen und Soll-Drehmomente für die Antriebsaggregate, aber auch Antriebsart und Betriebspunkte festlegt. Diese Informationen werden den dezentralen Steuerungen oder Steuereinrichtungen 2, 5 und 8 in Form von Steuersignalen zugeführt. Die Steuerungen oder Steuereinrichtungen 2, 5 und 8 erzeugen abhängig von diesen Steuersignalen Stellsignale für die einzelnen Aggregate oder Komponenten des Antriebsstrangs.

Wird vom Energiemanagement 31 festgestellt, dass ein unterer oder oberer Grenzwert der Ladung des Energiespeichers 4 unterschritten beziehungsweise überschritten ist, wird ein entsprechendes Anforderungssignal an das Antriebsstrangmanagement 12 übermittelt. Das Antriebsstrangmanagement 12 kann dann je nach Priorität des Anforderungssignals diese Information entweder bei der Festlegung der Betriebsstrategie für den nächstfolgenden Streckenabschnitt berücksichtigen oder unmittelbar die aktuelle Betriebsstrategie für den momentan zu absolvierenden Streckenabschnitt dahin gehend ändern, dass der Energiespeicher möglichst umgehend geladen oder entladen wird.

Wird vom Informationsmanagement 21 eine aktuelle Änderung der bereits übermittelten Streckendaten - zum Beispiel ein gemeldeter Stau, eine kurzfristige Umleitung auf der Fahrstrecke oder eine unvorhergesehen eingetretene Veränderung der Fahrbahnbeschaffenheit, beispielsweise durch Regen - erkannt, werden die aktualisierten Daten ohne Anforderung an das Antriebsstrangmanagement 12 übermittelt. Abhängig von den aktualisierten Daten wird dann eine an die veränderten Umgebungsbedingungen angepasste neue Betriebsstrategie festgelegt und die Schritte S4 bis S9 entsprechend durchlaufen.

## Patentansprüche

1. Verfahren zum Steuern eines Antriebsstranges eines Hybridfahrzeugs mit folgenden Schritten:
- Anfordern von Daten, die zumindest einen Teilabschnitt der zukünftig zu absolvierenden Fahrstrecke charakterisieren,
- Festlegen einer Betriebsstrategie für die einzelnen Komponenten des Antriebsstrangs abhängig von den Daten, die zumindest einen Teilabschnitt der zukünftig zu absolvierenden Fahrstrecke charakterisieren,
- Berechnen eines zu erwartenden Leistungsverbrauchs abhängig von den Daten, die zumindest einen Teilabschnitt der zukünftig zu absolvierenden Fahrstrecke charakterisieren und von der festgelegten Betriebsstrategie,
- Bestimmen einer Zeitspanne, für die die berechnete Leistung zur Verfügung gestellt werden kann,
- Prüfen, ob die bestimmte Zeitspanne zur Umsetzung der Betriebsstrategie ausreicht,
- Steuern der einzelnen Komponenten des Antriebsstrangs gemäß der Betriebsstrategie, falls Zeitspanne als ausreichend erkannt wird und
- Festlegen einer alternativen Betriebsstrategie und erneutes prüfen der sich daraus ergebenden Zeitspanne, falls Zeitspanne als nicht ausreichend erkannt wird, und
- Festlegen der Länge des Streckenabschnitts, für den Daten angefordert werden, in Abhängigkeit vom Ladezustand eines Energiespeichers (4) und/oder von der Speicherkapazität des Energiespeichers (4).

2. Verfahren nach Anspruch 1, **dadurch gekennzeichnet, dass** die Daten, die zumindest einen Teilabschnitt der zukünftig zu absolvierenden Fahrstrecke charakterisieren, bei Bedarf von einer Datenquelle (24) angefordert werden.

3. Verfahren nach einem der Ansprüche 1 bis 2, **dadurch gekennzeichnet, dass** die Betriebsstrategie abhängig vom Wirkungsgrad der einzelnen Komponenten des Antriebsstrangs und/oder vom Energieverbrauch und/oder von Emissionswerten festgelegt wird.

4. Verfahren nach einem der vorhergehenden Ansprüche, **dadurch gekennzeichnet, dass** bei Erkennen einer aktuellen Änderung bereits übermittelter Streckendaten aktualisierte Daten übermittelt werden und abhängig von den aktualisierten Daten eine neue Betriebsstrategie festgelegt wird.

## Claims

1. Method for controlling a drive train of a hybrid vehicle having the following steps:
- requesting of data which characterizes at least a section of the route which is to be travelled along in future,
- definition of an operating strategy for the individual components of the drive train as a function of the data which characterizes at least a section of the route which is to be travelled along in future,
- calculation of expected power consumption as a function of the data which characterizes at least a section of the route which is to be travelled along in future, and of the defined operating strategy,
- determination of a time period for which the calculated power can be made available,
- checking whether the time period which is determined is sufficient to convert the operating strategy,
- controlling the individual components of the drive train in accordance with the operating strategy if the time period is detected as being sufficient, and
- definition of an alternative operating strategy and renewed checking of the resulting time period if the time period is detected as not being sufficient, and
- definition of the length of the route section for which data is requested as a function of the charge state of an energy accumulator (4) and/or of the memory capacity of the energy accumulator (4).

2. Method according to Claim 1, **characterized in that** the data which characterizes at least a section of the route which is to be travelled along in future is requested from a data source (24) when necessary.

3. Method according to one of Claims 1 to 2, **characterized in that** the operating strategy is defined as a function of the efficiency of the individual components of the drive train and/or of the energy consumption and/or of emission values.

4. Method according to one of the preceding claims, **characterized in that** when a change in route data which has already been transferred is detected at a particular time, updated data is transferred and a new operating strategy is defined as a function of the updated data.

## Revendications

1. Procédé de commande d'une transmission d'un véhicule hydride, comprenant les étapes suivantes :
- appel de données caractérisant au moins un tronçon du trajet à parcourir,
- définition d'une stratégie de fonctionnement pour les différents composants de la transmission en fonction des données caractérisant au moins un tronçon du trajet à parcourir,
- calcul d'une consommation de puissance escomptée en fonction des données caractérisant au moins un tronçon du trajet à parcourir, et de la stratégie de fonctionnement définie,
- détermination d'un intervalle temporel pendant lequel la puissance calculée peut être fournie,
- contrôle d'adaptation de l'intervalle temporel déterminé pour l'application de la stratégie de fonctionnement,
- commande des différents composants de la transmission en fonction de la stratégie de fonctionnement, si l'intervalle temporel est reconnu suffisant, et
- définition d'une stratégie de fonctionnement alternative et nouveau contrôle de l'intervalle temporel en résultant, si l'intervalle temporel n'est pas reconnu suffisant, et
- définition de la longueur du tronçon de trajet pour lequel des données ont été appelées, en fonction de l'état de charge d'un accumulateur d'énergie (4) et/ou de la capacité d'accumulation de l'accumulateur d'énergie (4).

2. Procédé selon la revendication 1, **caractérisé en ce que** les données caractérisant au moins un tronçon du trajet à parcourir, sont appelées dans une source de données (24) si besoin.

3. Procédé selon l'une des revendications 1 et 2, **caractérisé en ce que** la stratégie de fonctionnement est définie en fonction du rendement des différents composants de la transmission et/ou de la consommation d'énergie et/ou des valeurs d'émissions.

4. Procédé selon l'une des revendications précédentes, **caractérisé en ce qu'**en cas de détection d'une variation actuelle de données de trajet déjà communiquées, des données mises à jour sont transmises et une nouvelle stratégie de fonctionnement est définie en fonction des données mises à jour.
